# FASCICULE DE BREVET EUROPEEN

(11) **EP 1 833 695 B1**
(45) Date de publication et mention de la délivrance du brevet: **14.01.2009**
(21) Numéro de dépôt: 05778198.1
(22) Date de dépôt: 20.06.2005
(51) Int. Cl.: B60K 6/20, F16H 3/093

(54) **BOITE DE VITESSES A DEUX ARBRES SECONDAIRES AVEC RENVOI DE COUPLE SUR L'ARBRE PRIMAIRE**
ZWEI AUSGANGSWELLEN MIT DREHMOMENTÜBERTRAGUNG AUF DIE EINGANGSWELLE UMFASSENDES GETRIEBE
GEARBOX COMPRISING TWO OUTPUT SHAFTS WITH TRANSMISSION OF TORQUE TO THE INPUT SHAFT

(30) Priorité: 29.06.2004 FR 0407118
(43) Date de publication de la demande: 19.09.2007
(73) Titulaire: RENAULT S.A.S., 92100 Boulogne Billancourt (FR)
(72) Inventeur: BUANNEC, Michel, F-78480 VERNEUIL SUR SEINE (FR); PICARD, Marc, F-92500 RUEIL MALMAISON (FR)
(86) Numéro de dépôt international: PCT/FR2005/050468
(87) Numéro de publication internationale: WO 2006/008405

(56) Documents cités:
- DE-A1- 10 305 639
- US-A- 4 565 106
- PATENT ABSTRACTS OF JAPAN vol. 2000, no. 20, 10 juillet 2001 (2001-07-10) -& JP 2001 082554 A (KYOWA GOKIN KK), 27 mars 2001 (2001-03-27)
- PATENT ABSTRACTS OF JAPAN vol. 2003, no. 09, 3 septembre 2003 (2003-09-03) -& JP 2003 139204 A (AICHI MACH IND CO LTD), 14 mai 2003 (2003-05-14) -& EP 1 443 244 A (AICHI MACHINE INDUSTRY CO. LTD) 4 août 2004 (2004-08-04)

## Description

La présente invention concerne une boîte de vitesses de véhicule automobile.

Plus précisément, elle concerne une boîte de vitesses à arbres parallèles et à deux embrayages comportant un arbre primaire plein et un arbre primaire creux concentriques , et deux arbres secondaires non concentriques.

Ce type de boîte de vitesses, connu de la publication FR 2 802 600, pose un problème d'encombrement. En effet lorsque la boîte de vitesse est montée transversalement dans le compartiment moteur, la commande de boîte doit être déportée par rapport à la couronne de différentiel, en direction de la face avant du véhicule. Cette disposition gêne l'implantation des autres composants de la boîte, comme le distributeur hydraulique, l'échangeur, et le système de lubrification.

La publication JP-A-2001 082554 décrit une boîte de vitesses comportant l'ensemble des caractéristiques du préambule de la revendication indépendante 1.

La présente invention vise à résoudre ce problème d'encombrement. Dans ce but, elle propose que l'arbre de renvoi soit placé entre un pignon de l'arbre primaire plein, et un pignon de l'arbre primaire creux.

Selon une autre caractéristique, la boîte de vitesses peut aussi comporter un arbre de renvoi de marche arrière, entre l'arbre primaire creux et un arbre secondaire.

D'autres caractéristiques et avantages de la présente invention apparaîtront clairement à la lecture de la description, suivante d'un mode de réalisation non limitatif de celle-ci, en se reportant aux dessins annexés, sur lesquels :
- la figure 1 est un schéma de principe de l'architecture proposée,
- la figure 2 montre la disposition de la boîte,
- les figures 3 à 9 montrent le cheminement du couple sur les rapports de première, deuxième, troisième, quatrième, cinquième, sixième et marche arrière, et
- les figures 10 et 11 montrent une possibilité d'hybridation de la boîte

La boîte de vitesses illustrée par les figures, possède deux arbres primaires 1, 2, dont un arbre primaire plein 1 et un arbre primaire creux 2 (reliés à deux embrayages d'entrée non représentés), auxquels il faut ajouter un troisième arbre primaire, ou premier arbre de renvoi 3, coaxial aux deux premiers. L'arbre primaire plein 1 porte trois pignons fixes, respectivement de la gauche vers la droite du schéma, le pignon fixe de première 4, le pignon fixe de cinquième 6, et le pignon fixe de troisième 7. L'arbre primaire creux 2 porte deux pignons fixes 8, 9, respectivement, de la gauche vers la droite, le pignon de quatrième, sixième et marche arrière, et le pignon de seconde.

L'arbre secondaire 11, ou arbre secondaire auxiliaire, porte, de la gauche vers la droite, un pignon secondaire de troisième 12, en prise avec le pignon fixe de troisième 7, un pignon de descente 13 sur le pignon 3a du premier arbre de renvoi 3, un pignon secondaire de quatrième et de marche arrière 14, en prise avec le pignon fixe 8 de quatrième sixième, marche arrière, et un pignon fou de marche arrière 16.

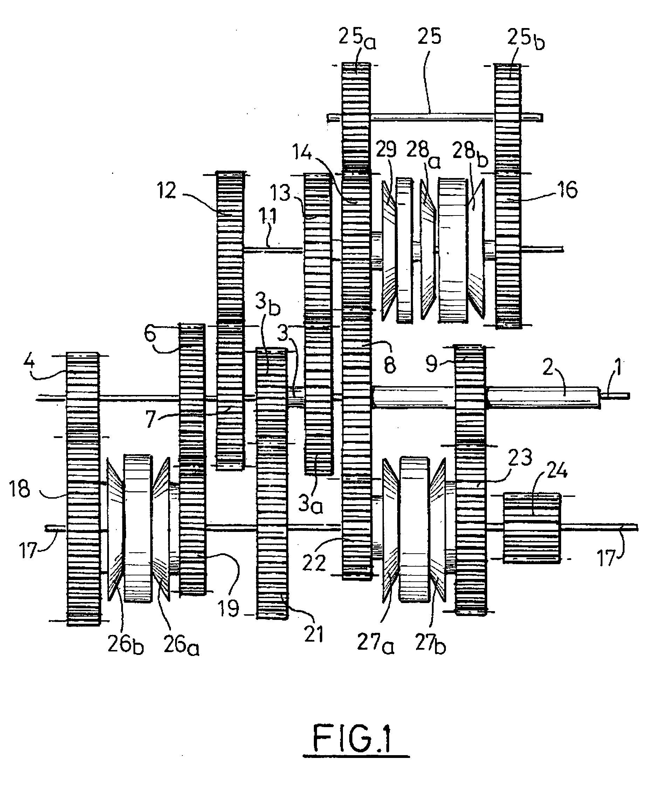

L'arbre secondaire 17, ou arbre secondaire principal, porte, de la gauche vers la droite : un pignon secondaire de première 18 (en prise avec le pignon fixe de première 4), un pignon secondaire de cinquième 19 (en prise avec le pignon fixe de cinquième 6), un pignon fixe de sortie de troisième et de quatrième 21 (en prise avec le pignon 3b du premier arbre de renvoi 3), un pignon secondaire de sixième 22 (en prise avec le pignon fixe de quatrième sixième et marche arrière 8), un pignon secondaire de deuxième 23 (en prise avec le pignon fixe de deuxième 9), et un pignon d'attaque 24 de la couronne de différentiel 31 (non représentée sur la figure 1).

Enfin, un second arbre de renvoi 25 porte deux pignons solidaires 25a, 25b, grâce auxquels il assure, en marche arrière, le renvoi du couple (qui lui est transmis par le pignon fixe 8 de quatrième, sixième et marche arrière) sur le pignon fixe 7 de l'arbre plein 1.

La boîte comporte aussi trois synchroniseurs doubles, 26a, 26b : 27a, 27b ; 28a, 28b, et un synchroniseur simple 29. Les synchroniseurs 26a à 29 assurent respectivement l'engagement des rapports suivants :
- première : 26b
- cinquième : 26a
- deuxième : 27a
- sixième : 27b
- troisième : 28a
- marche arrière : 28b
- quatrième 29.

Comme indiqué plus haut, les deux arbres primaires 1, 2, sont reliés à des embrayages, de préférence multidisques, non représentés. Les rapports de première, deuxième, cinquième et sixième sont directs, en ce sens que le couple passe directement d'un arbre primaire sur l'arbre secondaire principal 17, qui attaque la couronne de différentiel (non représentée) par le pignon 24. En revanche, les rapports de troisième, quatrième et marche arrière, ne sont pas directs. Sur ces rapports, le couple qui emprunte l'arbre secondaire auxiliaire 11, rejoint arbre secondaire principal 17, soit par le premier arbre de renvoi 3 (troisième et quatrième), soit par le deuxième arbre de renvoi 25 (marche arrière). Ainsi, l'arbre secondaire principal 17 porte un pignon 24 qui attaque directement la couronne du différentiel, alors que l'arbre secondaire auxiliaire 11 entraîne la couronne du différentiel par l'intermédiaire d'un arbre de renvoi 3 coaxial aux arbres primaires, ou de l'arbre de renvoi de marche arrière 25, qui transmet le couple sur l'arbre primaire plein 1.

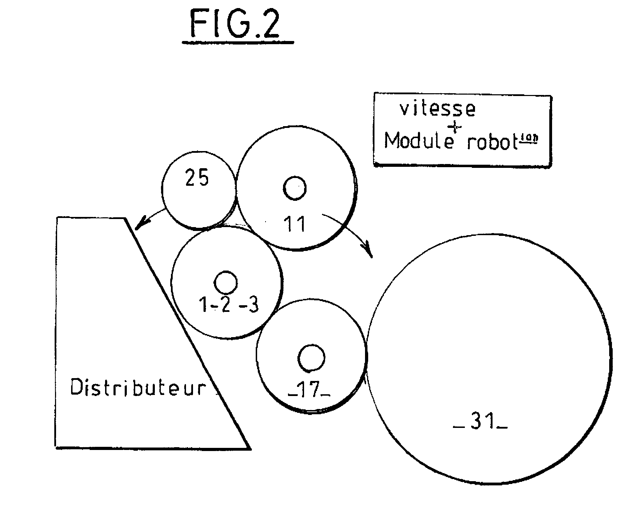

Sur la figure 2, correspondant à une vue extérieure latérale de la boîte, on a indiqué l'emplacement relatif des arbres primaires 1, 2, 3, des arbres secondaires 11, 17 de l'arbre de renvoi de marche arrière 25, et du différentiel 31. Ce schéma met en évidence comment l'architecture proposée permet de placer la commande de vitesses (et le module de robotisation éventuel associé à celle-ci), au dessus du différentiel 31. En effet, grâce à l'invention, l'arbre de renvoi de marche arrière 25 et l'arbre secondaire auxiliaire 11, disposent d'une liberté d'implantation, qui autorise cette disposition. Par ailleurs, il faut noter que tous les synchroniseurs sont sur les arbres secondaires, et que le renvoi de marche arrière 25 est placé suffisamment en hauteur dans la boîte, pour libérer l'emplacement nécessaire au système hydraulique de commande des embrayages (emplacement distributeur). Enfin, il reste assez de place pour l'échangeur au dessus du distributeur.

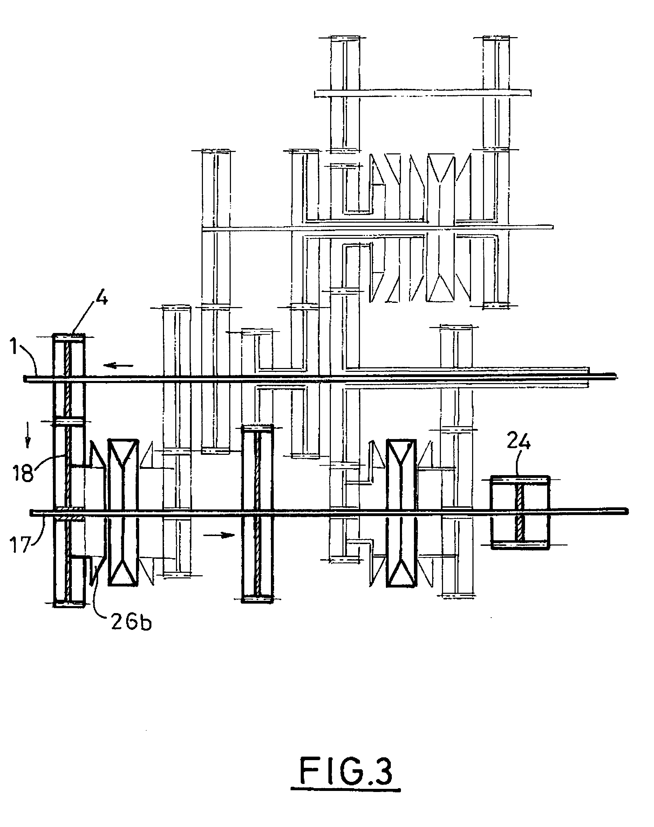

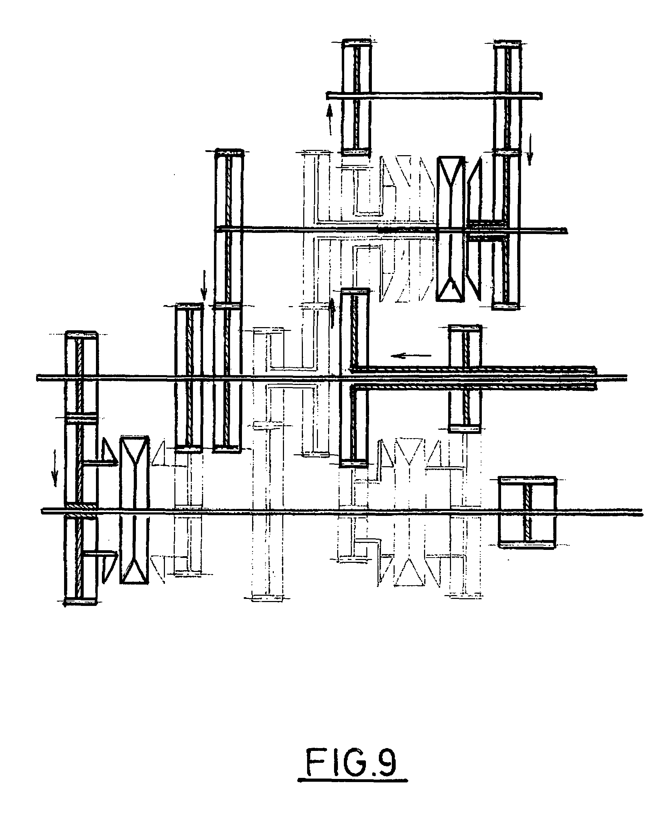

Sur les figures 3 à 9, on a représenté en gras le trajet du couple sur chaque rapport de la boîte. En première (figure 3), le couple passe directement de l'arbre primaire plein 1, sur l'arbre secondaire principal 17, par le synchroniseur 26b.

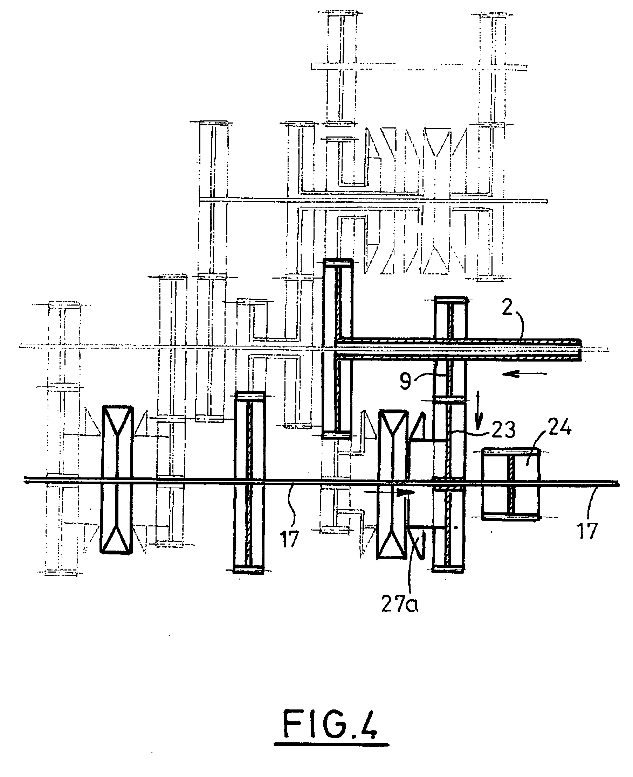

En deuxième (figure 4), le couple passe directement de l'arbre primaire creux 2, vers l'arbre secondaire principal 17, par le synchroniseur 27a.

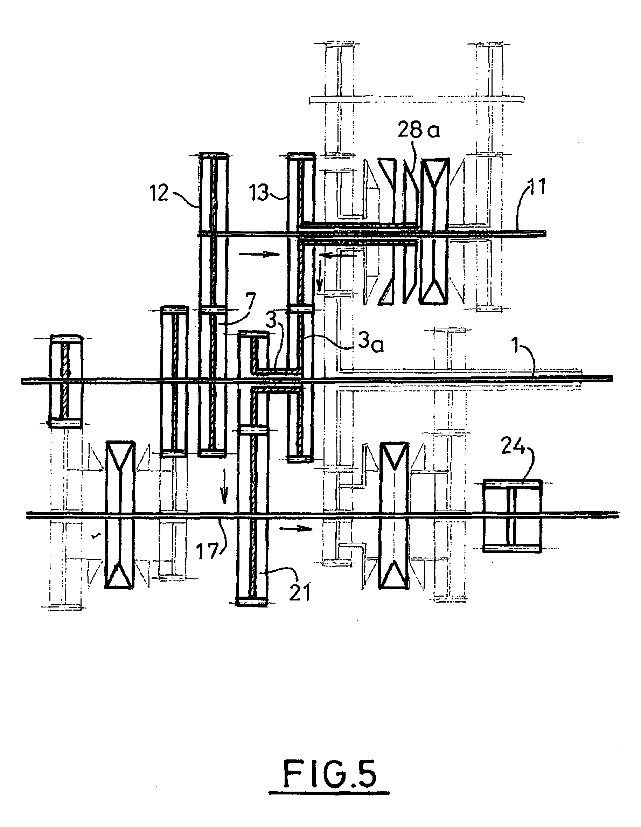

En troisième (figure 5), le couple passe de l'arbre primaire plein 1 sur l'arbre primaire auxiliaire 11 par l'engrenage 7, 12. Par le synchroniseur 28a, il emprunte ensuite la descente d'engrenage 13, 3a sur l'arbre de renvoi 3, et rejoint l'arbre secondaire principal 17 par le pignon 21.

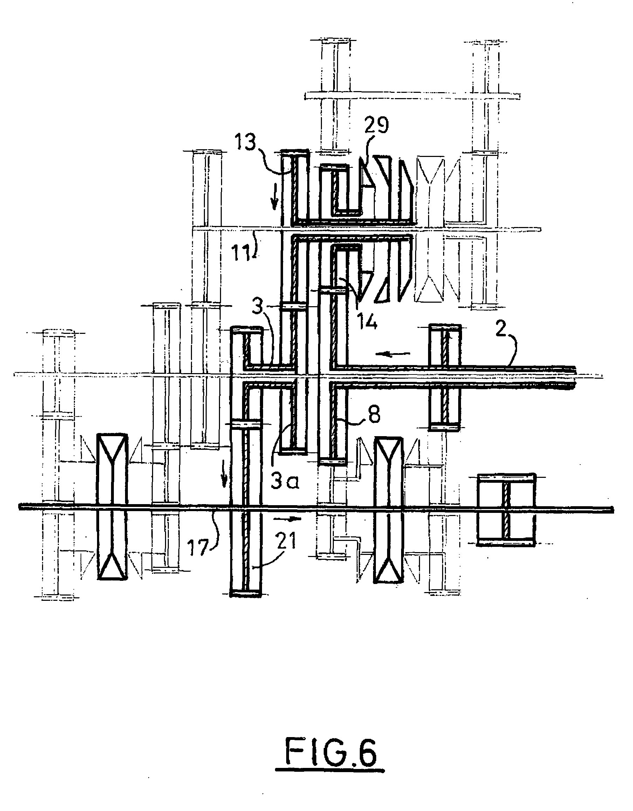

En quatrième (figure 6), le couple passe de l'arbre primaire creux 2 sur l'arbre secondaire auxiliaire 11 par l'engrenage 8, 14 et le synchroniseur 29. Il redescend ensuite, comme en troisième, sur l'arbre de renvoi 3 par l'engrenage 13, 3a. Il emprunte ensuite l'engrenage 3b, 21, pour atteindre l'arbre secondaire principal 17.

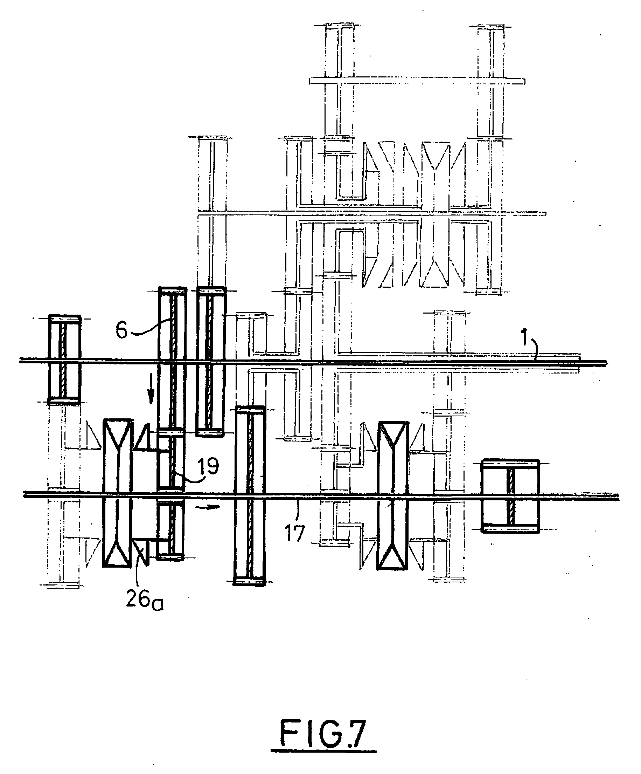

En cinquième (figure 7), le couple passe directement de l'arbre primaire plein 1 sur l'arbre secondaire principal 17, par l'engrenage 6, 19, et par le synchroniseur 26a.

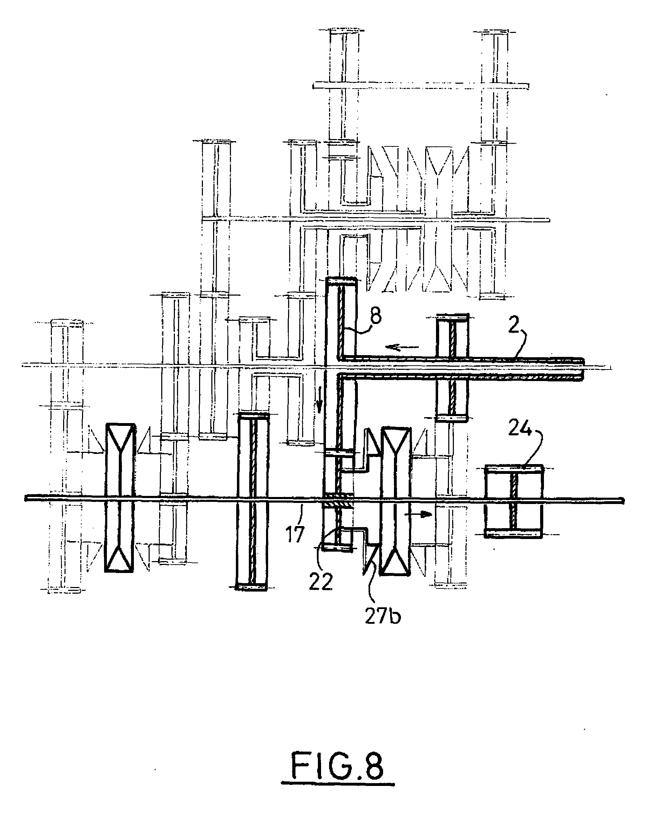

En sixième (figure 8), le couple passe directement de l'arbre primaire creux 2 sur l'arbre secondaire principal 17, par la descente d'engrenage 8, 22 et le synchroniseur 27b.

Enfin en marche arrière, le couple passe de l'arbre primaire creux 2 vers l'arbre de renvoi de marche arrière 25 par l'engrenage 8, 25b, puis vers l'arbre secondaire 11 auxiliaire par le pignon fou de marche arrière 16, et vers l'arbre primaire plein 1 par l'engrenage 12, 7. Enfin, il rejoint l'arbre secondaire principal 17, par l'engrenage de première 4.

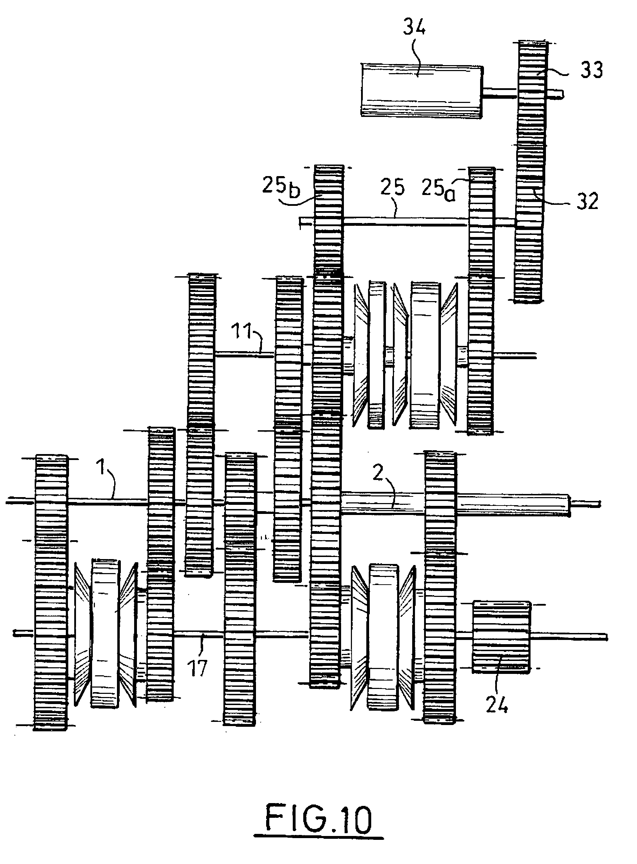

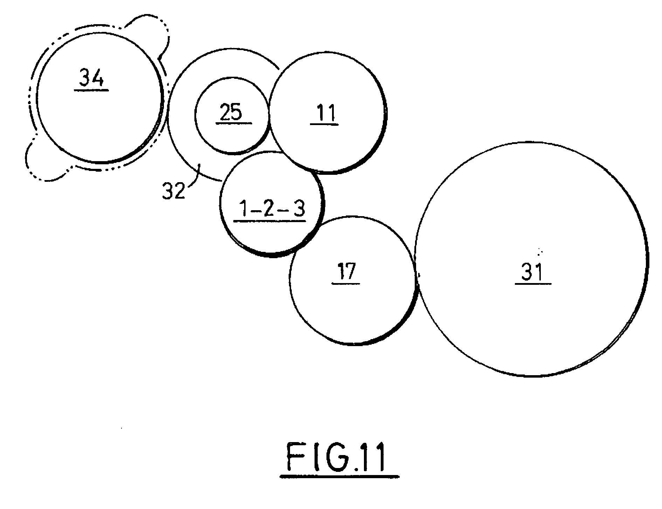

Sur la figure 10, on retrouve l'architecture des figures précédentes, Toutefois, l'arbre de renvoi de marche arrière 25 dispose ici d'un pignon supplémentaire 32 qui engrène avec un pignon 33 monté sur l'axe d'un moteur électrique 34, disposé par exemple en lieu et place du démarreur. Cet ajout permet d'obtenir directement une transmission hybride, en utilisant l'architecture de boîte décrite ci-dessus. Comme le montre la figure 11, la disposition du renvoi de marche arrière 25 entre la ligne primaire et l'arbre secondaire auxiliaire, en haut de boîte, donc près du démarreur, est très favorable à cette « hybridation ».

L'architecture proposée par l'invention présente de nombreux avantages, parmi lesquels on peut souligner l'utilisation de l'arbre de renvoi de marche arrière pour retourner sur l'engrenage de première en marche arrière. En effet, grâce à cette disposition, pour passer de marche avant en marche arrière, il suffit d'inverser les embrayages d'entrée de la boîte et de fermer un synchroniseur (28b). On profite ainsi du rapport de démultiplication de première, qui est adapté à la marche arrière, et l'opération de changement de rapport première marche arrière, est particulièrement simple à réaliser.

Enfin, il faut retenir la possibilité de tirer profit de l'arbre de renvoi de marche arrière pour transformer la boîte de vitesses proposée, en transmission hybride.

## Revendications

1. Boîte de vitesses à arbres parallèles et à deux embrayages comportant un arbre primaire plein (1) et un arbre primaire creux (2) concentriques et deux arbres secondaires (11, 17) non concentriques, dont un premier arbre secondaire (17) porte un pignon (24) qui attaque directement une couronne de différentiel alors que le deuxième arbre secondaire (11) entraîne la couronne par l'intermédiaire d'un arbre de renvoi (3) coaxial aux arbres primaires (1, 2), **caractérisée en ce que** l'arbre de renvoi (3) est monté sur l'arbre primaire plein (1) entre le pignon primaire de troisième (7) qui est monté sur l'arbre primaire plein (1), et le pignon primaire de quatrième et de sixième (8) qui est monté sur l'arbre primaire creux (2).

2. Boîte de vitesses selon la revendication 1, **caractérisée en ce que** sur le rapport de troisième, le couple passe d'un pignon primaire fixe (7) sur l'arbre primaire plein (1), vers un pignon (12) du deuxième arbre secondaire (11) relié par un premier crabot' (28a) à un pignon de descente (13) sur l'arbre de renvoi (3), puis vers un pignon fixe (21) de sortie sur le premier arbre secondaire (17).

3. Boîte de vitesses selon la revendication 1 ou 2, **caractérisée en ce que** sur le rapport de quatrième, le couple passe par un pignon primaire (8) fixe sur l'arbre primaire creux (2), vers un pignon (14) du deuxième arbre secondaire (11) relié par un second crabot (29) à un pignon de descente (13) sur l'arbre de renvoi (3), puis vers un pignon fixe (21) de sortie sur le premier arbre secondaire (17).

4. Boîte de vitesses selon l'une des revendications précédentes, **caractérisée en ce qu'**elle comporte un arbre de renvoi de marche arrière (25) entre l'arbre primaire creux (2) et le deuxième arbre secondaire (11).

5. Boîte de vitesses selon la revendication 4, **caractérisée en ce que** sur le rapport de marche arrière, le couple passe de l'arbre primaire creux (2) vers l'arbre de renvoi de marche arrière (25), puis vers le deuxième arbre secondaire (11), l'arbre primaire plein (1), et le premier arbre secondaire (17).

6. Boîte de vitesses selon la revendication 5, **caractérisée en ce que** sur le rapport de marche arrière, le couple rejoint le premier arbre secondaire (17) par l'engrenage de première (4, 18).

7. Boîte de vitesses selon l'une des revendications 4, 5 ou 6, **caractérisée en ce que** l'arbre de renvoi de marche arrière (25) porte un pignon supplémentaire (32) relié à un moteur électrique (34).

8. Transmission hybride, comportant une boîte de vitesse selon l'une des revendications 4 à 7.

## Claims

1. Gearbox with parallel shafts and two clutches, comprising a solid input shaft (1) and a hollow input shaft (2), which are concentric, and two non-concentric output shafts (11, 17), of which a first output shaft (17) bears a pinion (24), which directly drives a differential ring gear, whereas the second output shaft (11) drives the ring gear via a countershaft (3) coaxial with the input shafts (1, 2), **characterized in that** the countershaft (3) is mounted on the solid input shaft (1) between the third-gear input pinion (7), which is mounted on the solid input shaft (1), and the fourth and sixth gear input pinion (8), which is mounted on the hollow input shaft (2).

2. Gearbox according to Claim 1, **characterized in that**, in third gear, the torque passes from a fixed input pinion (7) to the solid input shaft (1) toward a pinion (12) of the second output shaft (11) connected by a first positive clutch (28a) to a descending pinion (13) on the countershaft (3), then toward a fixed output pinion (21) on the first output shaft (17).

3. Gearbox according to Claim 1 or 2, **characterized in that**, in fourth gear, the torque passes via a fixed input pinion (8) on the hollow input shaft (2) toward a pinion (14) of the second output shaft (11) connected by a second positive clutch (29) to a descending pinion (13) on the countershaft (3), then toward a fixed output pinion (21) on the first output shaft (17).

4. Gearbox according to one of the preceding claims, **characterized in that** it comprises a reverse-gear countershaft (25) between the hollow input shaft (2) and the second output shaft (11).

5. Gearbox according to Claim 4, **characterized in that**, on the reverse gear, the torque passes from the hollow input shaft (2) toward the reverse-gear countershaft (25), then toward the second output shaft (11), the solid input shaft (1) and the first output shaft (17).

6. Gearbox according to Claim 5, **characterized in that**, on the reverse gear, the torque rejoins the first output shaft (17) via the first-gear gear train (4, 18).

7. Gearbox according to one of Claims 4, 5 or 6, **characterized in that** the reverse-gear countershaft (25) bears a supplementary pinion (32) connected to an electric motor (34).

8. Hybrid transmission, comprising a gearbox according to one of Claims 4 to 7.

## Patentansprüche

1. Getriebe mit parallelen Wellen und mit zwei Kupplungen, umfassend eine Eingangsvollwelle (1) und eine Eingangshohlwelle (2), die konzentrisch sind, und zwei nicht konzentrische Ausgangswellen (11, 17), wobei eine erste Ausgangswelle (17) ein Zahnrad (24) trägt, das direkt auf ein Differential-Tellerrad einwirkt, während die zweite Ausgangswelle (11) das Tellerrad über eine sich koaxial zu den Eingangswellen (1, 2) erstreckende Vorgelegewelle (3) antreibt, **dadurch gekennzeichnet, dass** die Vorgelegewelle (3) zwischen dem Eingangsrad (7) der dritten Gangstufe, das auf der Eingangsvollwelle (1) angebracht ist, und dem Eingangsrad (8) der vierten und sechsten Gangstufe, das auf der Eingangshohlwelle (2) angebracht ist, auf der Eingangsvollwelle (1) angebracht ist.

2. Getriebe nach Anspruch 1, **dadurch gekennzeichnet, dass** im dritten Gang das Drehmoment von einem Eingangsfestrad (7) auf der Eingangsvollwelle (1) zu einem Zahnrad (12) der zweiten Ausgangswelle (11), das durch eine erste Klauenkupplung (28a) mit einem Untersetzungsrad (13) auf der Vorgelegewelle (3) verbunden ist, dann zu einem Ausgangsfestrad (21) auf der ersten Ausgangswelle (17) übertragen wird.

3. Getriebe nach Anspruch 1 oder 2, **dadurch gekennzeichnet, dass** im vierten Gang das Drehmoment durch ein Eingangsfestrad (8) auf der Eingangshohlwelle (2) zu einem Zahnrad (14) der zweiten Ausgangswelle (11), das durch eine zweite Klauenkupplung (29) mit einem Untersetzungsrad (13) auf der Vorgelegewelle (3) verbunden ist, dann zu einem Ausgangsfestrad (21) auf der ersten Ausgangswelle (17) übertragen wird.

4. Getriebe nach einem der vorhergehenden Ansprüche, **dadurch gekennzeichnet, dass** es eine Rückwärtsgang-Vorgelegewelle (25) zwischen der Eingangshohlwelle (2) und der zweiten Ausgangswelle (11) aufweist.

5. Getriebe nach Anspruch 4, **dadurch gekennzeichnet, dass** im Rückwärtsgang das Drehmoment von der Eingangshohlwelle (2) zur Rückwärtsgang-Vorgelegewelle (25), dann zur zweiten Ausgangswelle (11), der Eingangsvollwelle (1) und der ersten Ausgangswelle (17) übertragen wird.

6. Getriebe nach Anspruch 5, **dadurch gekennzeichnet, dass** im Rückwärtsgang das Drehmoment durch den ersten Zahnradsatz (4, 18) zur ersten Ausgangswelle (17) gelangt.

7. Getriebe nach einem der Ansprüche 4, 5 oder 6, **dadurch gekennzeichnet, dass** die Rückwärtsgang-Vorgelegewelle (25) ein Zusatzrad (32) trägt, das mit einem Elektromotor (34) verbunden ist.

8. Hybridantrieb, das ein Getriebe nach einem der Ansprüche 4 bis 7 aufweist.
